Europäisches Patentamt

European Patent Office

Office européen des brevets

(11) Publication number: **0 209 271**
A2

# EUROPEAN PATENT APPLICATION

(21) Application number: 86304889.8

(22) Date of filing: 25.06.86

(51) Int. Cl.⁴: **F 16 D 55/14**

(30) Priority: 06.07.85 GB 8517216

(43) Date of publication of application: 21.01.87
Bulletin 87/4

(84) Designated Contracting States: DE FR GB IT

(71) Applicant: LUCAS INDUSTRIES public limited company,
Great King Street, Birmingham, B19 2XF West Midlands
(GB)

(72) Inventor: Price, Anthony George, 14 Meadow Lane
Croesyceillog, Cwmbran Gwent NP44 2EY Wales (GB)
Inventor: Campbell, Roy, The Corner House 1 Marlbrook
Lane Licky Rock, Bromsgrove Worcestershire (GB)

(74) Representative: Spall, Christopher John et al, BARKER,
BRETTELL & DUNCAN 138 Hagley Road, Edgbaston
Birmingham B16 9PW (GB)

(54) Improvements in self-energising disc brakes.

(57) In order to provide a substantially constant input velocity ratio, a substantially constant brake factor, or a compromise between the two, the arrangement of the recesses (14) in the pressure plates (6, 7), and in particular that of the ramp surfaces (22), is constructed and arranged such that a given relative angular movement between the plates produces a predetermined separation of the plates in an axial direction. This can be achieved by constraining the balls (13) in both recesses of each pair for movement in a predetermined path, conveniently by means of a scissors action, or the balls (13) are constrained against relative bodily movement in the recesses in one plate (6), with the ramp surfaces (22) of the recesses in the other plate (7) being suitably profiled.

1

# IMPROVEMENTS IN SELF-ENERGISING DISC BRAKES

This invention relates to self-energising disc brakes of the kind in which rotatable friction discs provided with friction linings are adapted to be brought into engagement with spaced opposed braking surfaces in a housing by pressure plates located between the friction discs and centred by stationary pilot lugs, application of the brake being initiated by angular movement of the pressure plates effected by operation of a brake-applying mechanism connected to radially projecting lugs on the plates, and through which a brake-applying force is applied to the plates, balls or rollers being located in co-operating recesses in the adjacent faces of the pressure plates such that on operation of the brake-applying mechanism to move the pressure plates angularly in opposite directions, the engagement of the balls or rollers with ramps defined by edges of the recesses causes the pressure plates to move apart into engagement with the friction discs which are urged into engagement with the braking surfaces, the pressure plates being carried round with the friction discs until one is arrested by the engagement of a lug on the plate with a drag-taking stop abutment in the housing and the continued angular movement of the other pressure plate provides a servo action.

Self-energising brakes of the kind set forth are commonly used in tractors and like vehicles.

In known brakes of the kind set forth the balls or rollers are free to adopt any free position within the constraints of a pair of ramps which are substantially parallel. In addition the brake-applying mechanism usually comprises links which are pivotally connected to the radially projecting lugs on the plates and through which a brake-applying force, for example from a pedal, is applied to the plates which a pull-rod, which is pivotally connected to the inner ends of the links, is moved in a radial direction.

In such known constructions in which the links are substantially equal in length, and the distances between the pivotal connections on the lugs and the common pivotal connection with the pull-rod are substantially equal, the input velocity ratio changes as wear of the friction linings progresses. Specifically the velocity ratio steadily reduces as the links follow up the relative angular movement of the pressure plates which, via the balls or rollers and ramps, is a consequence of clearances, deflections, and lining wear of the braking faces. It therefore follows that there is an undesirable reduction in mechanical advantage which progressively worsens during the life of the friction linings.

Clearly it is desirable to maintain the velocity ratio substantially at a constant value throughout the wear life of the friction linings, particularly in those constructions in which travel setting, usually precise manual adjustment to compensate for wear of the friction linings, is normal practice.

In other constructions it may be desirable, as a modification to this for the "brake-factor" to remain substantially constant. The "brake-factor" (BF) can be defined as:-

$$BF = \frac{\text{Total Lining Drag}}{\text{Pull-rod effort}}$$

3

Then constancy can be achieved using the relationship:-

$$\tan \theta_2 = \frac{V_2}{V_1} (\tan \theta_1 - \mu) + \mu$$

where $\theta_1$ is the instantaneous effective ramp angle in synchronisation with

$V_1$ the instantaneous velocity ratio (pull-rod travel/angular movement of the pressure plates - measured at the lining effective radius).

$\theta$ is similarly in association with $V_2$

and $\mu$ is the nominal brake lining coefficient of friction.

A substantially constant brake factor will ensure a substantially constant input effort, the optimum conditions for balanced braking, especially on steer-turn tractors with independent pressure balanced hydraulically actuated brakes.

A substantially constant brake factor is normally to be preferred to a substantially constant overall velocity ratio, since the latter displays improving performance characteristics as brake lining wear occurs, but it is in the new lining condition that any legal requirements are measured.

In some circumstances a compromise between the

4

"constant velocity" and the "brake-factor" approach may be desirable.

According to one aspect of our invention, in a self energising disc brake of the kind set forth the ramps are so constructed and arranged that for a given relative angular displacement between the pressure plates the balls or rollers are constrained to be located in a single pre-determined position relative to the pressure plates, the balls or roller being located in corresponding single positions relative to the pressure plates for each corresponding relative angular displacement of the pressure plates, a given relative angular movement between the pressure plates producing a pre-determined separation of the plates in an axial direction.

This is achieved by avoiding parallelism between the ramps of a pair and instead arranging for the profiles of the ramps to be such that the effective ramp angles change in senses which directly complement changes in the geometry of the links of the brake-applying mechanism.

By suitably varying the ramp angles we can achieve a substantially constant velocity ratio or a substantially constant brake-factor (BF), or compromise between the two.

When it is desired to provide a substantially constant velocity ratio, the required variations in the ramp angles are greater than those required for a constant brake-factor, and the brake can become more sensitive to lining frictional changes.

Balls may be constrained by a scissors action of the recesses of a complementary pair with the recesses being set in directions which cross. For a measured relative angular movement of the pressure plates, the resultant axial separation between the plates diminishes as the balls assume a reducing pitch circle diameter. In such a construction the angle of each ramp may be uniform or variable.

In another construction each ball or roller can be constrained against relative movement with respect to one of the plates, with the necessary ramp angle being profiled in the complementary recess in the other plate. In such a construction the ball or roller may be constrained by a liner of low friction material housed in the recess. This improves performance in brakes of a "dry" type. In brakes of a "liquid-cooled" type no such liner is normally necessary since adequate lubrication is provided by the cooling oil.

According to a second aspect of our invention an actuator assembly for a disc brake of the self-energising type comprises first and second pressure plates which are superimposed upon each other, balls or rollers located in co-operating inclined angularly spaced recesses in adjacent faces of the pressure plates, and tension return springs acting between the pressure plates to urge them towards each other with the balls or rollers urged towards the lower ends of ramps defined by the edges of the recesses, the ramps being so constructed and arranged that for a given relative angular displacement between the pressure plates the balls or rollers are constrained to be located in a single pre-determined position relative to the pressure plates, the balls or rollers being located in corresponding single positions relative to the pressure plates for each corresponding relative angular

6

determined separation of the plates in an axial direction.

A known disc brake of the kind set forth and some brakes in accordance with the present invention are illustrated in the accompanying drawings in which:-

Figure 1 is an end elevation of a known brake provided with new friction linings and with the brake in an off position;

Figure 2 is a view similar to Figure 1 but with the brake applied;

Figure 3 is a section through a pair of complementary recesses in the pressure plates in the position they assume in Figure 2;

Figure 4 is a view similar to Figure 1 but with the friction lining fully worn;

Figure 5 is a view similar to Figure 4 but with the brake applied;

Figure 6 is a section through a pair of complementary recesses in the pressure plates in the position they assume in Figure 5;

Figure 7 is an elevation of portions of pairs of pressure plates in accordance with our invention with new friction linings;

Figure 8 is a section on the line 8-8 of Figure 7;

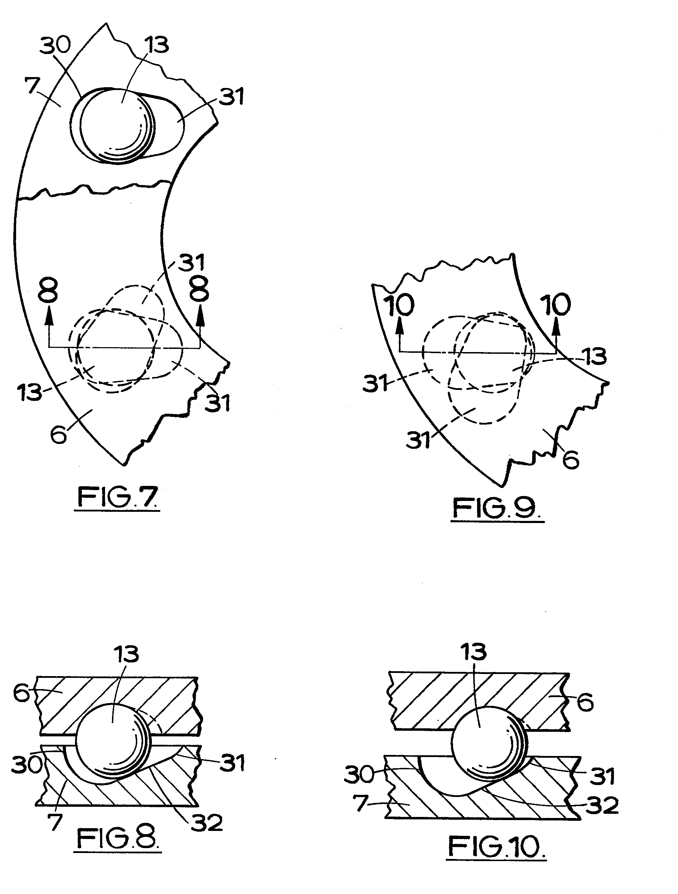

Figure 8 is a section on the line 8-8 of Figure 7;

Figure 9 is an elevation similar to Figure 7 but with the lining worn;

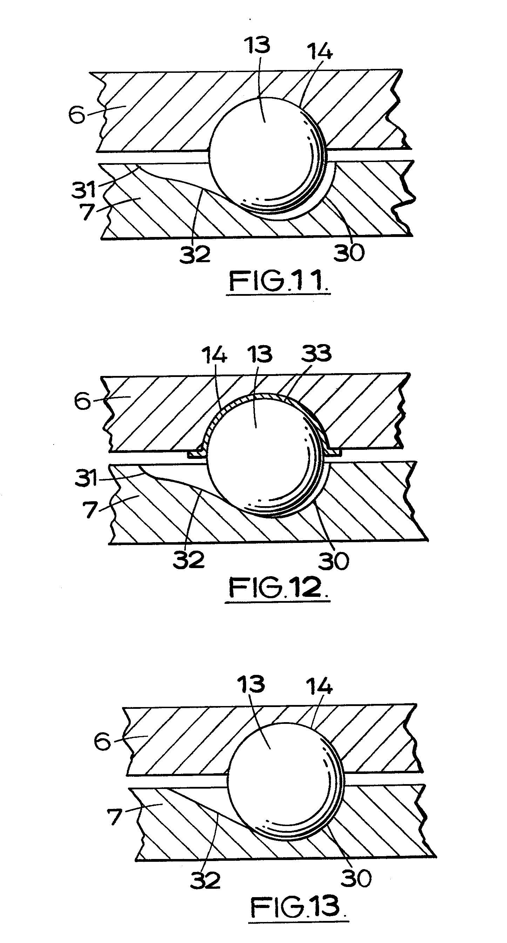

Figure 10 is a section on the line 10-10 of Figure 9;

Figure 11 is a section through a pair of pressure plates showing a modification;

Figure 12 is a section similar to Figure 11 but including a further modification; and

Figure 13 is a section similar to Figure 11 but showing another construction.

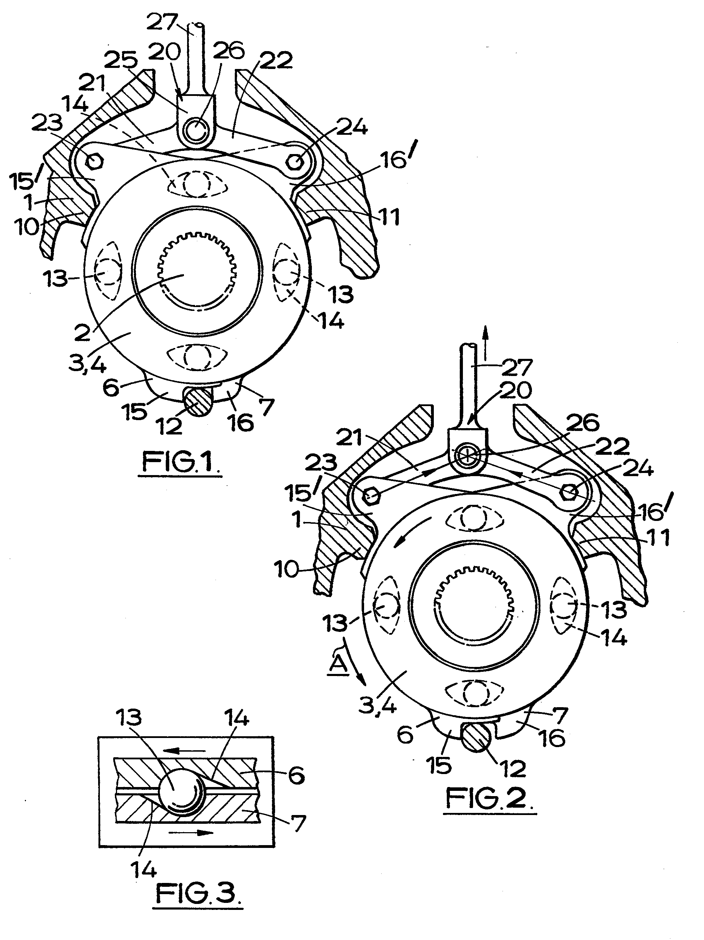

In the known construction illustrated in Figures 1 to 6 of the drawings a self-energising brake comprises a housing 1 through which a rotatable shaft 2 extends axially. A pair of axially spaced friction discs 3, 4 provided on opposite sides with linings of friction material are slidably splined on the shaft 2. The discs 3, 4 are adapted to be brought into engagement with axially spaced radial braking surfaces at opposite ends of the housing 1 by a pair of annular pressure plates 6 and 7 which are located between the discs and are centred by three stationary pilot lugs 10, 11, 12 on the housing 1. Balls or rollers 13 are located in angularly spaced co-operating oppositely inclined recesses 14 in adjacent faces of the pressure plates 6 and 7. Angularly spaced tension return springs (not shown) act to urge the pressure plates together.

The application of the brake is initiated by

8

moving the pressure plates 6 and 7 angularly in opposite directions which causes the balls 13 to tend to ride up ramps formed by parallel walls of recesses 14, and the pressure plates 6 and 7 then move apart into with the friction discs 3, 4 to urge them into engagement engagement with the radial surfaces 8 on the housing 1.

When the discs 3, 4 are rotating in one direction, the plates 6 and 7 are carried round with the discs 3, 4 until one plate is arrested by the engagement of a radial lug 15, 16 on that plate with a drag-taking stop abutment in the form of an anchor pin defined by the lug 12. Continued angular movement of the other plate provides a servo-action to increase the braking torque.

When the shaft 2 is rotating in the opposite direction and the brake is applied, the sequence described above is repeated except that the angular movement of the other plate is arrested.

The angular movement of the plates 6 and 7 to apply the brake is initiated by a brake-applying mechanism 20. The mechanism 20 comprises a pair of toggle links 21 and 22 which are symmetrically arranged and are of equal lengths. The link 21 is pivotally connected at its innermost end to a radial lug 15' on the pressure plate 6 by a connection 23, and the link 22 is pivotally connected at its innermost end to a radial lug 16' on the pressure plate 7 by a pivotal connection 24. The free ends of both links 20 and 21 are pivotally connected between the limbs of a bifurcated fitting 25 by means of a pivot pin 25 and the fitting is coupled to the inner end of a radially movable pull-rod 27.

9

In the application of the brake, a pull applied to the pull-rod 27 in a radial direction is transmitted to both toggle links 21 and 22 to urge the lugs 15' and 16' towards each other in a circumferential direction to effect application of the brake with self-energising action as described above.

When the shaft 2 is rotating in the anti-clockwise direction shown by the arrow A in Figure 2 of the drawings, the pressure plates 6 and 7 are carried round with the discs 3 and 4 until the plate 6 is arrested by the engagement of the lug 15 with the stop abutment 12.

When the friction linings are new as shown in Figures 1 to 3, the links 21 and 22 are substantially in the positions shown in full lines in Figure 2 with the pull-rod 27 having been displaced circumferentially through a relatively small distance and with the balls or rollers 13 having ridden away correspondingly small distances up the ramp surfaces 14 when the brake is applied.

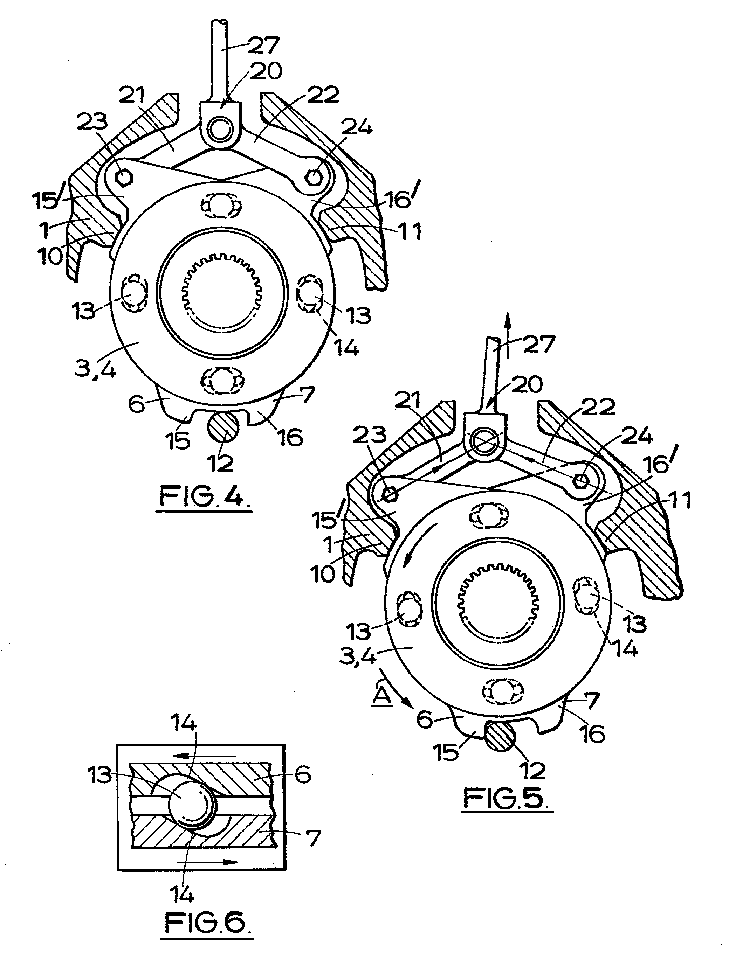

When the friction linings are worn, in an "off" position of brake shown in Figure 4 the balls or rollers 13 are held up the ramp surfaces 14 and both lugs 15 and 16 are displaced by substantial distances from the anchor pin 12.

When the brake is applied, as shown in Figure 5, the pull-rod 22 is displaced circumferentially through a similar distance to that between Figures 1 and 2, but the distance through which it is moved to effect application of the brake is relatively less than the distance through which it is moved to apply the brake when the linings are new.

10

conditions illustrated in Figures 1 to 3, and in Figures 4 to 6.

In the construction in accordance with the invention and illustrated in Figures 7 to 10, the overlapping recesses 14 of each pair are arranged to diverge inwardly in a generally radially inwards direction from a deeper outer end portion 30 of part-spherical outline to a shallower and narrower inner end portion 31.

The ramp surfaces 32 which interconnect the outer and inner end portions 30 and 31 may be of uniform or variable angle.

Each ball 13 is constrained between the recesses 14 of the respective pair by a scissors action of the two recesses.

As shown in Figures 7 and 8, with the linings new, the balls 13 are constrained between the deeper outer end portions 30 of corresponding pairs of recesses 14. When the brake is applied the balls 13 ride up the ramp surfaces 32 as shown in Figure 8, with the balls 13 assuming a reducing pitch circle.

As shown in Figures 9 and 10, with the linings worn, the balls 13 are constrained by the recesses between the ends of the ramp surfaces 32 which are adjacent to the shallower inner end portions 31 of the recesses.

It will thus be seen that for a measured relative angular movement of the pressure plates 6 and 7, the resultant axial separation of the plates diminishes relatively as the balls 13 assume the reducing pitch circle diameter.

In the modified construction of Figure 11, each ball 13 is constrained directly by the corresponding recesses 14 in the plate 6 which is of substantially hemi-spherical outline, and the ramp surfaces of the recesses 14 in the plate 7 are of variable angle to provide the desired velocity ratio or brake-factor (BF).

As shown in Figure 12, each ball 13 is constrained by a liner 33 of low-friction material which is received in the respective recess 14 in the plate 6.

The liner 33 improves the performance of brakes of the "dry" type.

The modified construction illustrated in Figure 13 is similar to Figure 11 except that the ramp surfaces 32 have uniform angles and the inner end portions 31 are omitted. This facilitates construction since machining of the recesses in the plate 7 is simplified.

0209271

12

CLAIMS

1. A self-energising disc brake of the kind in which rotatable friction discs (3, 4) provided with friction linings are adapted to be brought into engagement with spaced opposed braking surfaces in a housing (1) by pressure plates (6, 7) located between the friction discs (3, 4) and centred by stationary pilot lugs (10, 11, 12), application of the brake being initiated by angular movement of the pressure plates (6, 7) effected by operation of a brake-applying mechanism (20) connected to radially projecting lugs (15', 16') on the plates, and through which a brake-applying force is applied to the plates, balls or rollers (13) being located in co-operating recesses (14) in the adjacent faces of the pressure plates such that on operation of the brake-applying mechanism (20) to move the pressure plates angularly in opposite directions, the engagement of the balls or rollers (13) with ramps defined by edges of the recesses (14) causes the pressure plates to move apart into engagement with the friction discs which are urged into engagement with the braking surfaces, the pressure plates (6, 7) being carried round with the friction discs (3, 4) until one is arrested by the engagement of a lug (15, 16) on the plate with a drag-taking stop abutment (12) in the housing (1) and the continued angular movement of the other pressure plate provides a servo action, characterised in that the ramps are so constructed and arranged that for a given relative angular displacement between the pressure plates (6, 7) the balls or rollers (13) are constrained to be located in a single pre-determined position relative to the pressure plates (6, 7), the balls or rollers being located in corresponding single positions relative to the pressure plates for each corresponding relative

13

angular displacement of the pressure plates, a given relative angular movement between the pressure plates producing a pre-determined separation of the plates in an axial direction.

2. A disc brake according to claim 1 characterised in that the profiles (30, 31, 32) of the ramps are arranged to be such that the effective ramp angles change in senses which directly complement changes in the geometry of the links (20, 21, 22, 23, 24) of the brake-applying mechanism (20) to compensate the brake in a pre-determined manner for wear of the friction linings.

3. A disc brake according to claim 2 characterised in that the ramp angles are arranged so as to achieve a substantially constant velocity ratio throughout the wear life of the friction lining.

4. A disc brake according to claim 2 characterised in that the ramp angles are arranged so as to achieve a substantially constant brake-factor throughout the wear life of the friction lining.

5. A disc brake according to claim 2 characterised in that the ramp angles are arranged so as to achieve a pre-determined compromise between maintaining the velocity ratio and the brake-factor constant throughout the wear life of the friction lining.

6. A disc brake according to any preceding claim characterised in that balls (13) are located in the recesses (14) and are constrained by a scissors action of a complementary pair of the recesses (14) which are set in directions which cross.

14

7. A disc brake according to claim 6 characterised in that for a measured relative angular movement of the pressure plates (6, 7) the resultant axial separation between the plates diminishes as the balls (13) assume a reducing pitch circle diameter.

8. A disc brake according to any one of claims 1 to 5 characterised in that each ball or roller (13) is constrained against relative movement with respect to one of the plates (6, 7) and the necessary ramp angle is profiled in the complementary recess (14) in the other plate.

9. A disc brake according to claim 8 characterised in that the ball or roller (13) is constrained against relative movement with respect to the one plate (6, 7) by a liner (33) of low friction material housed in the recess (14) of the one plate.

10. An actuator assembly for a disc brake of the self-energising type comprising first and second pressure plates (6, 7) which are superimposed upon each other, balls or rollers (13) located in co-operating inclined angularly spaced recesses (14) in adjacent faces of the pressure plates (6, 7), and tension return springs acting between the pressure plates to urge them towards the lower ends of ramps defined by the edges of the recesses (14), characterised in that the ramps are so constructed and arranged that for a given relative angular displacement between the pressure plates (6, 7) the balls or rollers (13) are constrained to be located in a single pre-determined position relative to the pressure plates, the balls or rollers being located in corresponding single positions relative to the pressure plates for each corresponding relative angular displacement of the pressure plates, a given relative

15

movement between the pressure plates producing a pre-determined separation of the plates in an axial direction.

FIG.1.

FIG.2.

FIG.3.

0209271

2/4

FIG.4.

FIG.5.

FIG.6.

FIG.7.

FIG.9.

FIG.8.

FIG.10.

0209271

4/4

FIG.11.

FIG.12.

FIG.13.